# Europäisches Patentamt
# European Patent Office
# Office européen des brevets

(11) Numéro de publication: **0 217 704**
B1

(12)
# FASCICULE DE BREVET EUROPEEN

(45) Date de publication du fascicule du brevet:
28.06.89

(51) Int. Cl.⁴: **B23B 5/16**, B23B 27/00

(21) Numéro de dépôt: 86401981.5

(22) Date de dépôt: 10.09.86

(54) Appareil pour gratter la surface extérieure d'un tube.

(30) Priorité: 19.09.85 FR 8513902

(43) Date de publication de la demande:
08.04.87 Bulletin 87/15

(45) Mention de la délivrance du brevet:
28.06.89 Bulletin 89/26

(84) Etats contractants désignés:
AT BE CH DE GB IT LI LU NL SE

(56) Documents cités:
CH-A- 551 829
DE-A- 3 238 102
FR-A- 1 160 870
FR-A- 1 357 130
GB-A- 821 862
US-A- 3 171 309

(73) Titulaire: GAZ DE FRANCE, 23, rue Philibert Delorme,
F-75017 Paris(FR)
Titulaire: SENSCO S.A.R.L., 11, rue de Gravereau,
F-89100 Sens(FR)

(72) Inventeur: Le Testu, Patrick, Quartier Ourouspoure,
F-64990 Saint Pierre d'Irube(FR)
Inventeur: Pfeiffer, Dominique, 14, Prairie Souville,
Ermenonville F-60440 Manteuil Le Haudoin(FR)
Inventeur: Cochetel, Michel, 24, Rue Marc Sangnier,
F-91690 Savignny Sur Orge(FR)
Inventeur: Longeau, Jean-Michel, Hameau de Beaujard,
F-89500 Villeneuve Sur Yonne(FR)

(74) Mandataire: Lerner, François, 5, rue Jules Lefèbvre,
F-75009 Paris(FR)

ACTORUM AG

## Description

L'invention a pour objet un appareil pour gratter une partie au moins de la surface extérieure de la partie extrême d'un tube cylindrique à section circulaire ou sensiblement circulaire, en particulier des tubes en matière plastique par exemple du type polyèthylène, polychlorure de vinyle (PVC) ou autres.

Cet appareil est plus particulièrement du type destiné à effectuer la préparation de surfaces, par exemple celles de tubes avant leur assemblage, notamment par soudage sur un manchon de liaison.

En particulier du fait du stockage, parfois long, des tubes, leur surface est souvent oxydée. Aussi, avant de pouvoir les assembler, il faut éliminer l'épaisseur de matière oxydée.

A cet effet, la technique propose d'utiliser notamment une poudre abrasive. Cependant, son utilisation est déconseillée, la surface obtenue après l'action de cette poudre ne permettant pas de garantir un assemblage suffisamment fiable. En outre, son emploi peut s'avérer dangereux.

On peut aussi utiliser un grattoir pour effectuer ladite préparation ; l'opération s'effectuant manuellement. Ce procédé est mal commode. De plus, il nécessite un espace suffisant autour du tube (lequel peut être disposé à l'intérieur d'une tranchée) qui permette d'effectuer le grattage. Il est, en outre, à noter que la surface préparée doit avoir été débarrassée le plus complètement possible de sa couche oxydée, l'assemblage étant d'autant plus fiable que l'opération de surfaçage aura été bien effectuée.

On peut également, comme divulgué notamment au document US-A 3 171 309, utiliser un appareil de grattage du type comprenant un mandrin de centrage prenant appui à l'intérieur du tube à surfacer par l'intermédiaire de patins, une unité de grattage de la surface extérieure du tube et des moyens de réglage et de positionnement de cette unité de grattage par rapport à l'axe du tube.

Cependant, sur un tel appareil, dans la mesure où l'outil de l'unité de grattage se déplace sur la surface du tube selon un rayon pratiquement constant, il ne peut absorber les éventuelles surépaisseurs ou défauts d'ovalisation du tube. En d'autres termes, cet appareil ne permet pas d'enlever un copeau d'épaisseur sensiblement constante quelles que soient les déformations du tube (cintrage, ovalisation, défauts d'épaisseurs...).

Le même problème se retrouve au brevet français FR A 1 357 130. En effet, même si à ce document on cherche à limiter la profondeur de pénétration d'un outil de machine-outils dans une pièce, en prévoyant un galet formant butée réglable pour l'outil, de tels moyens ne permettent pas de maintenir constante cette profondeur de pénétration, quels que puissent être les défauts de surface des pièces.

L'invention vise donc à résoudre ce problème. C'est pourquoi, elle propose un dispositif de grattage de la surface extérieure d'un tube sensiblement cylindrique à section sensiblement circulaire, du type comprenant un mandrin expansible pour maintenir coaxialement ledit dispositif vers l'extérieur du tube, une tige d'entraînement liée au mandrin, une plaque fixée sur ladite tige et disposée sensiblement perpendiculairement à elle, une partie monté de façon adjacente à ladite plaque par rapport à laquelle ladite partie est mobile sensiblement parallèlement, un moyen de blocage pour fixer la position du plateau sur la plaque à une distance radiale déterminée de l'axe du tube, une unité de manœuvre et de réglage fixée audit plateau et s'étendant sensiblement parallèlement au mandrin, à proximité de la surface extérieure dudit tube, et un outil de grattage monté sur l'unité de manœuvre et de réglage et comprenant une lame de grattage, ledit dispositif se caractérisant en ce que ladite partie est conformée comme un plateau et en ce que l'outil de grattage comprend en outre un palpeur solidaire de la lame de grattage, lequel palpeur est élastiquement relié à l'unité de manœuvre et de réglage et vient en contact de la surface extérieure du tube, de manière à maintenir une pénétration de coupe sensiblement constante de la lame dans le tube.

Avantageusement, selon l'invention, le palpeur sera relié à l'unité de manœuvre et de réglage par l'intermédiaire d'une lame élastique.

De cette façon, l'outil sera maintenu élastiquement pendant toute l'opération de grattage contre la surface du tube et pourra effectivement absorber les défauts éventuels de celui-ci.

L'invention, ses caractéristiques et avantages apparaîtront plus clairement à l'aide de la description qui va suivre, faite en référence aux dessins annexés dans lesquels:

— la figure 1 présente schématiquement l'appareil de grattage, selon une coupe longitudinale,
— la figure 2 montre schématiquement l'outil de grattage en cours d'opération de surfaçage,
— la figure 3 présente l'outil de grattage en début d'opération.
— la figure 4 présente, schématiquement, une vue selon IV de l'outil présenté à la figure 2.

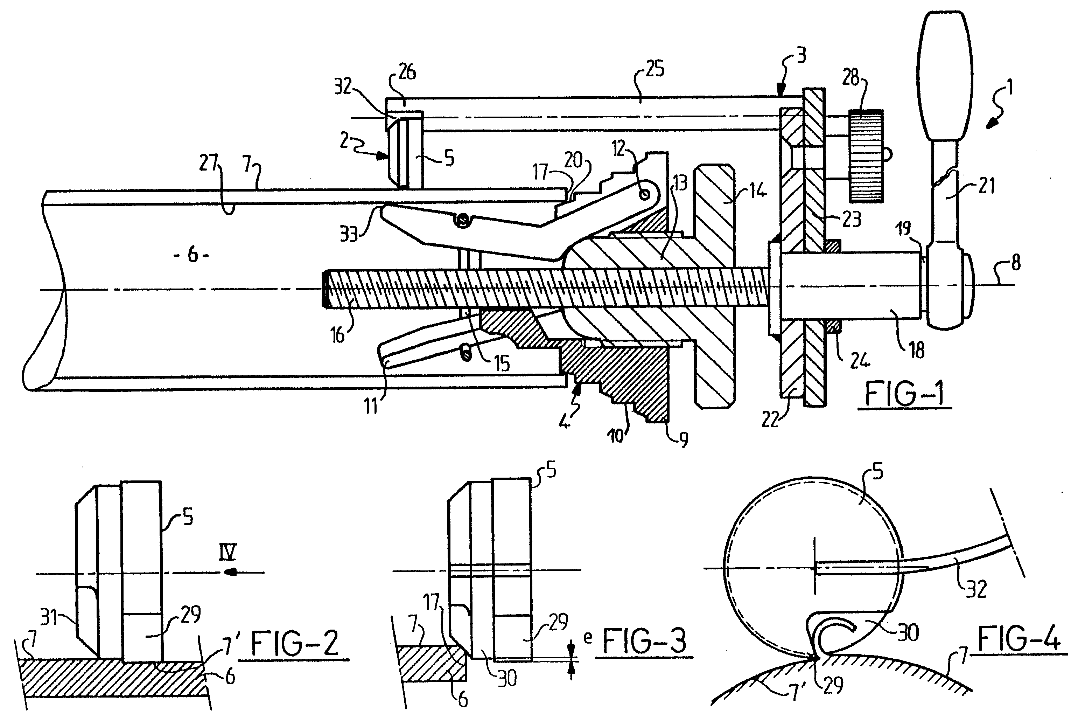

En se reportant tout d'abord à la figure 1, l'appareil de grattage, repéré dans son ensemble 1, comprend au moins :

- une unité de grattage 2, disposée à proximité de la surface extérieure 7 du tube 6, et comportant un outil 5,
- un mandrin 4 expansible s'étendant vers l'intérieur d'un tube 6, sensiblement dans l'axe 8 de celui-ci,
- et une unité 3 de manoeuvre et de réglage, assurant le maintien de l'unité 2 de grattage et sa liaison mécanique avec le mandrin 4 de centrage de l'unité de manœuvre et de réglage 3 dans l'axe 8 du tube.

Le mandrin 4 comprend notamment un cône 9 à étages 10, 20 ; l'étage adapté s'emboîtant à force selon l'axe 8 vers l'intérieur de l'extrémité 17 du tube, bloquant ainsi le cône 9 en rotation et en translation par rapport au tube 6. Plusieurs bras 11 d'appui coudés sont liés mécaniquement au cône 9. Dans l'exemple présenté à la figure 1, le mandrin 4 comporte trois bras 11 d'appui, disposés angulairement sensiblement à 120° les uns des autres, et qui pivotent autour de leur axe 12. Lorsque le mandrin 4 est fixé sur le tube 6, les bras 11 s'étendent vers l'intérieur du tube 6 et viennent en appui, en 33, contre la paroi intérieure 27 dudit tube. En outre, un système de rappel 15, en soi connu, par exemple du type à ressort, permet en fin d'opération, de ramener les bras 11 en position repos ; c'est-à-dire de les dégager des points d'appui 33.

Un tampon 13 d'écartement des bras 11, muni d'un volant de manoeuvre 14, traverse sensiblement axialement la partie centrale du cône 9. Le tampon 13, qui coopère avec le système de rappel 15, permet de positionner les bras 11 dans le tube 6, en réglant leur force d'appui contre la paroi 27. Le volant 14, accessible manuellement, peut se présenter sous la forme d'une poignée, d'une came de commande à levier, ou de tout autre organe de commande adapté.

L'unité 3 de manoeuvre et de réglage, qui assure le maintien de l'unité de grattage 2 et sa liaison avec le mandrin 4, comprend une tige d'entraînement 16 qui s'étend depuis un noyau 18 vers l'intérieur du tube 6, à travers la partie centrale du tampon 13. Lorsque le mandrin 4 est fixé sur le tube 6, la tige d'entraînement 16 et le noyau 18 sont situés sensiblement coaxialement au tube. Le noyau 18 présente à son extrémité 19 une empreinte permettant la prise d'un levier de commande 21. Le levier 21 peut être du type roue, volant, ou tout autre organe de commande adapté. Sur le noyau 18, et sensiblement perpendiculairement à celui-ci, est fixée de façon rigide, par exemple par soudage, une plaque 22. Contre la plaque 22, glisse un plateau coulissant 23. Le plateau 23 est maintenu en appui contre la plaque 22 par un moyen de maintien 24, par exemple du type bague. Le plateau coulissant 23 permet de placer, à une distance radiale déterminée de l'axe 8 du tube 6, l'unité de grattage 2. L'unité de grattage 2 est reliée au plateau coulissant 23 par l'intermédiaire d'un bras 25, qui s'étend à l'extérieur du tube 6, sensiblement parallèlement à son axe 8. L'unité de grattage 2, située vers l'extrémité 26 du bras 25, est donc disposée en porte à faux, lorsque l'unité de grattage 2 n'est pas en opération ; c'est-à-dire lorsque l'outil 5 ne porte pas contre la paroi 7 du tube 6. Le moyen de blocage 28, du type vis ou bouton à ressort par exemple, assure le positionnement du plateau 23 par rapport à la plaque 22, et ainsi fixe la distance radiale adaptée pour effectuer l'opération de grattage.

En se reportant maintenant aux figures 2 et 3, on note que l'outil 5 de l'unité de grattage 2 comprend une lame de grattage 29, un palpeur 30 et/ou une lame de chanfreinage 31. Ces trois éléments peuvent constituer un seul bloc ou être disposés en appui les uns à la suite des autres en formant plusieurs parties distinctes ; le palpeur 30 étant en cours d'opération en permanence en appui contre la surface brute, c'est-à-dire non préparée, de la périphérie extérieure 7 du tube 6. Dans le cas où l'outil 5 est muni d'une lame de chanfreinage 31, celle-ci est, de préférence, placée contre le palpeur 30. Un ressort 32, fixé d'une part sur le bras 26 et d'autre part sur l'outil 5, assure une certaine élasticité à l'outil 5, lors de l'opération de grattage (figure 4).

L'appareil décrit ci-dessus fonctionne de la façon suivante :

On place à une distance radiale déterminée par rapport à l'axe 8 du tube 6, l'unité de grattage 2, afin de faciliter le positionnement de l'appareil 1.

On solidarise l'unité 2 au tube 6, grâce au mandrin 4 et par l'intermédiaire de l'unité 3 de manoeuvre et de réglage. A cet effet, après avoir emboîté sensiblement coaxialement au tube 6 l'un des étages 10, 20 du cône en étages 9, on visse le tampon 13, muni d'un filetage, dans le cône 9, pourvu vers son centre d'un taraudage, grâce au moyen de manoeuvre 14. Ainsi, le tampon 13 pousse les bras coudés 11, ce qui entraîne leur appui contre une partie de la surface intérieure 27 du tube 6.

On amène l'unité de grattage 2 contre la surface extérieure 7 du tube 6, en faisant coulisser le plateau 23 sur la plaque fixe 22. On maintient cette position à l'aide du moyen de fixation 28. Afin de placer l'outil 5 sur la zone déterminée de la surface à gratter, on débraye, c'est-à-dire que l'on désolidarise la tige 16 du tampon 13, ce qui permet de libérer le mouvement longitudinal, sensiblement selon l'axe 8, de l'outil 5. Lorsque la position est fixée, on embraye à nouveau la tige 16 sur le tampon 13. La liaison entre le tampon 13 et la tige 16 permettant le débrayage et l'embrayage de ces deux pièces est en soi connue et n'a pas été représentée.

On déplace ladite unité 2 sur la surface à gratter de la périphérie externe 7 du tube 6. L'outil 5 est entraîné en rotation autour du tube 6 grâce à la tige d'entraînement 16, sensiblement coaxial au tube. A chaque tour d'outil 5, on déplace la tige 16 dans une direction qui permet de déplacer l'outil 5 vers une nouvelle zone à gratter.

La tige 16 étant filetée elle se déplace dans un taraudage prévu à cet effet dans le tampon 13, et l'outil 5 se déplace, dans un mouvement simultané de translation et de rotation, autour de l'axe 8 du tube 6.

Si l'outil 5 est pourvu d'une lame de changreinage 31, il est avantageux de positionner en début d'opération de grattage la lame de chanfreinage 31 contre l'extrémité 17 du tube 6. Dans ce cas, on effectuera le surfaçage de l'extrémité 17 vers le tube 6 (le filetage de la tige 16 ayant été prévu à cet effet).

Il est bien évident que l'on manoeuvre la poignée 21 pendant toute la durée de l'opération. Cette poignée permettant d'entraîner au moins en rotation la tige 16 et l'outil 5.

Au cours du surfaçage, la lame 29 pénètre dans la surface extérieure 7 du tube 6 et se trouve en appui contre la surface grattée 7'. Le palpeur 30 permet de maintenir une pénetration $e$ de coupe constante en restant en appui, au cours de l'ensemble de l'opération de grattage, contre la surface non grattée 7.

Lorsque l'opération de grattage est achevée, c'est-à-dire que l'on a obtenu la longueur de surfaçage désirée, on relève l'outil 5 en desserrant le moyen de fixation 28, et en faisant coulisser le plateau 23 sur la plaque 22. On peut alors débloquer le mandrin 4 et le dégager en repliant les bras 11. A cet effet on dévisse le tampon 13 grâce à la poignée de manoeuvre 14. On peut alors enlever l'appareil 1 du tube 6.

Comme il va de soi, et comme il résulte d'ailleurs de ce qui précède, l'invention ne se limite pas uniquement au mode de réalisation et d'application qui a été plus spécialement envisagé. En particulier, on peut concevoir une variante dans laquelle la poignée de manoeuvre 21 est du type, en soi connu, clé à cliquet. Ce montage permettant, en particulier, de limiter l'espace nécessaire à l'utilisateur pour manoeuvrer l'appareil. En effet, cette clé permet une manoeuvre unidirectionnelle.

En outre, dans le cas où la tige 16 est filetée, le pas des filets (et celui du taraudage coopérant formé sur le tampon 13) est adapté afin qu'il y ait un recouvrement partiel, à chaque tour d'outils, entre la zone grattée et la zone à gratter ; l'outil 5 se déplaçant sensiblement selon une hélice à pas constant.

De cette façon, on évite de laisser, dans la zone où l'opération de surfaçage doit être effectuée, des surfaces intermédiaires non grattées.

Enfin, il est à noter que la lame de chanfreinage 31, positionnée en début d'opération vers l'extrémité 17 du tube 6, permet d'obtenir une pente d'attaque adaptée, améliorant ainsi notamment la liaison ultérieure de deux tubes coopérants et leur introduction dans un manchon de liaison.

En d'autres termes, la lame de chanfreinage n'a d'effet, en général, qu'en début d'opération et permet un pré-ébavurage du tube 6 vers son extrémité 17 (figure 3). En cours d'opération de surfaçage, seule la lame 29 assure le grattage du tube 6 selon une profondeur de coupe $e$, réglée par le palpeur 30. (figure 2).

Afin de permettre le positionnement de l'outil vers l'extrémité 17 du tube 6 et le début de l'opération de grattage, il est prévu un espace suffisant, en particulier, les étages 10, 20 du cône 9 sont formées de façon appropriée.

## Revendications

1. Dispositif pour gratter, au niveau d'une de ses extrémités, une partie au moins de la surface de circonférence extérieure d'un tube sensiblement cylindrique présentant une section circulaire ou sensiblement circulaire, du type comprenant:
 – un mandrin (4) expansible pour maintenir coaxialement ledit dispositif vers l'extérieur du tube (6),
 – une tige (16) d'entraînement liée au mandrin (4),
 – une plaque (22) fixée sur ladite tige (16) et disposée sensiblement perpendiculairement à elle,
 – une partie (23) monté de façon adjacente à ladite plaque (22) par rapport à laquelle ladite partie est mobile sensiblement parallèlement,
 – un moyen (28) de blocage pour fixer la position du plateau (23) sur la plaque (22), à une distance radiale déterminée de l'axe du tube (6),
 – une unité (3) de manoeuvre et de réglage fixée audit plateau (23) et s'étendant sensiblement parallèlement au mandrin (4), à proximité de la surface extérieure dudit tube (6),
 – et un outil (5) de grattage monté sur l'unité (3) de manoeuvre et de réglage et comprenant une lame de grattage (29), caractérisé en ce que ladite partie (23) est conformée comme un plateau et en ce que ledit outil (5) de grattage comprend en outre un palpeur (30) solidaire de la lame (29) de grattage, lequel palpeur est élastiquement relié à l'unité (3) de manoeuvre et de réglage et vient en contact de la surface extérieure (7) du tube (6), de manière à maintenir une pénétration de coupe ($e$) sensiblement constante de la lame (29) dans le tube.

2. Appareil selon la revendication 1, caractérisé en ce que le palpeur (30) et la lame de grattage (29) sont reliés à l'unité (3) de manoeuvre et de réglage par l'intermédiaire d'une lame à ressort (32).

3. Appareil selon la revendication 1 ou la revendication 2, caractérisé en ce que le mandrin (4) comprend au moins:
 – un cône (9) à étages (10, 20) dont l'un des étages s'emboîte sensiblement axialement vers l'intérieur de l'extrémité (17) dudit tube (6),
 – plusieurs bras (11) coudés liés mécaniquement audit cône (9) et destinés à venir s'appuyer contre la surface intérieure du tube (6),
 – et un tampon (13) monté sur la tige (16) d'entraînement pour assurer l'écartement des bras (11) vers la surface intérieure dudit tube (6).

4. Appareil selon la revendication 3, caractérisé en ce que le mandrin comprend trois bras (11) d'appui disposés angulairement, sensiblement à 120° les uns des autres.

5. Appareil selon l'une quelconque des revendications précédentes, caractérisé en ce que la tige (16) d'entraînement est commandée par une poignée de manoeuvre (21) unidirectionnelle.

## Claims

1. A device for scraping at least a part of the outer circumferential surface of one of the ends of a substantially cylindrical tube having a circular or substantially circular cross-section, of the type comprising:
 – an expansible mandrel (4) for maintaining the device coaxially towards the outside of the tube (6),
 – a drive rod (16) connected to the mandrel (4),
 – a plate (22) mounted on the said rod (16) and disposed substantially at a right angle thereto,
 – a part (23) mounted adjacent the said plate (22) in relation to which the said part is adapted for substantially parallel movement,
 – locking means (28) for fixing the position of the part (23) on the plate (22), at a specified radial distance from the axis of the tube (6),
 – a manoeuvring and regulating unit (3) fixed to the said part (23) and extending substantially parallel with the mandrel (4), close to the outer surface of the said tube (6),
 – and a scraping tool (5) mounted on the manoeuvring and regulating unit (3) and comprising a scraper blade (29), characterised in that the said part (23) is shaped like a circular plate and in that the said scraping tool (5) comprises in addition a sensor (30) rigid with the scraper blade (29), the said sensor being flexibly connected to the manoeuvring and regulating unit (3), coming in contact with the outer surface (7) of the tube (6) to maintain a substantially constant cutting depth ($e$) of the blade (29) into the tube.

2. An apparatus according to Claim 1, characterised in that the sensor (30) and the scraper blade (29) are connected to the manoeuvring and regulating unit (3) by a leaf spring (32).

3. An apparatus according to Claim 1 or Claim 2, characterised in that the mandrel (4) comprises at least:
   – a cone (9) having stages (10, 20) one of the stages fitting substantially axially into the interior of the end (17) of the said tube (6),
   – a plurality of angled arms (11) connected mechanically to the said cone (9) and intended to bear against the inside surface of the tube (6),
   – and a plug (13) mounted on the drive rod (16) to ensure that the arms (11) are moved aside towards the inner surface of the said tube (6).

4. An apparatus according to Claim 3, characterised in that the mandrel comprises three bearer arms (11) which are disposed angularly, substantially at an angle of 120° in respect of one another.

5. An apparatus according to any one of the preceding Claims, characterised in that the drive rod (16) is controlled by a uni-directional operating handle (21).

**Patentansprüche**

1. Vorrichtung zum Schaben mindestens eines Teils der äußeren Umfangsoberfläche eines im wesentlichen zylindrischen Rohres an einem seiner Enden, wobei das Rohr einen kreisförmigen oder im wesentlichen kreisförmigen Querschnitt hat, mit:
   – einem dehnbaren Dorn (4), um die Vorrichtung gegen das äußere des Rohres (6) koaxial zu halten,
   – einer mit dem Dorn (4) verbundenen Antriebsstange (16),
   – einer an der Stange (16) befestigten Platte (22), die zu der Stange im wesentlichen senkrecht angeordnet ist,
   – einem Teil (23), welches an die Platte (22) anstoßend angebracht ist, bezüglich welcher dieses Teil im wesentlichen parallel beweglich ist,
   – einem Blockiermittel (28), um die Position der Scheibe (23) auf der Platte (22) in einem bestimmten Radialabstand von der Achse des Rohres (6) festzulegen,
   – einer Betätigungs- und Steuereinheit (3), die an der Scheibe angebracht ist und sich im wesentlichen parallel zum Dorn (4) in der Nähe der äußeren Oberfläche des Rohres (6) erstreckt,
   – und einem Schabewerkzeug (5), welches auf der Betätigungs- und Steuereinheit (3) angebracht ist und ein Schabemesser (29) aufweist, dadurch gekennzeichnet, daß dieses Teil (23) wie eine Scheibe ausgebildet ist und daß das Schabewerkzeug (5) ferner einen Fühler (30) aufweist, der formschlüssig mit dem Schabemesser (29) verbunden ist und mit der Betätigungs- und Steuereinheit (3) elastisch verbunden ist und mit der äußeren Oberfläche (7) des Rohres (6) derart in Berührung kommt, daß ein Eindringen des Schnittes (e) des Messers (29) in das Rohr im wesentlichen konstant gehalten wird.

2. Apparat nach Anspruch 1, dadurch gekennzeichnet, daß der Fühler (30) und das Schabemesser (29) mittels eines Federblattes (32) mit der Betätigungs- und Steuereinheit (3) verbunden sind.

3. Apparat nach Anspruch 1 oder Anspruch 2, dadurch gekennzeichnet, daß der Dorn (4) mindestens aufweist:
   – einen Kegel (9) mit Stufen (10, 20), wobei eine der Stufen im wesentlichen axial zum Inneren des Endes (17) des Rohres (6) paßt,
   – mehrere knieförmig gebogene Arme (11), die mit dem Kegel (9) mechanisch verbunden und dazu bestimmt sind, gegen die innere Oberfläche des Rohres (6) in Abstützung zu kommen,
   – und einen Stopfen (13), der auf der Antriebsstange (16) angebracht ist, um den Abstand der Arme (11) zu der inneren Oberfläche des Rohres (6) sicherzustellen.

4. Apparat nach Anspruch 3, dadurch gekennzeichnet, daß der Dorn drei Stützarme (11) aufweist, die im Winkel, im wesentlichen unter 120° zueinander angeordnet sind.

5. Apparat nach einem der vorhergehenden Ansprüche, dadurch gekennzeichnet, daß die Antriebsstange (16) durch einen einseitig gerichteten Betätigungsgriff (21) gesteuert wird.

FIG-1

FIG-2

FIG-3

FIG-4